# EUROPEAN PATENT APPLICATION

(11) **EP 2 757 782 A1**
(43) Date of publication of application: **23.07.2014**
(21) Application number: 12831987.8
(22) Date of filing: 21.08.2012
(51) Int. Cl.: H04N 7/18, B60R 1/00, B60R 21/00

(54) **SURROUNDINGS MONITORING DEVICE FOR WORK MACHINE**

(30) Priority: 16.09.2011 JP 2011202852
(71) Applicant: Hitachi Construction Machinery Co., Ltd., Bunkyo-ku Tokyo 112-0004 (JP)
(72) Inventor: ISHIMOTO, Hidefumi, Tsuchiura-shi Ibaraki 300-0013 (JP)
(74) Representative: MERH-IP Matias Erny Reichl Hoffmann
(86) International application number: PCT/JP2012/071033
(87) International publication number: WO 2013/038874

(57) **Abstract**

[Problem] The present invention has an object to improve the safety and the efficiency of the work by making surveillance of the situation around a work machine more precisely with excellent visibility.

[Solution] There is provided plural cameras mounted on said swiveling structure 5, respective two cameras being partially overlapped their view fields with each other, a view point converter 23 to generate virtual view point images from camera images of respective cameras by converting their view points, an image composer 24 to compose a composite image of respective virtual view point images from the view point convertor 23 to address respectively to corresponding display areas, a display image creator 25 to generate a display image, in addition to the composite image as a first image, a second image taken by one of the cameras including opposite boundaries of said virtual view point images, and a monitor 14 to display of the images on the screen.

## Description

### Field of the Invention

The present invention relates to a surroundings monitoring device for a work machine provided for monitoring surrounds of the work machine for the purpose to ensure such as safety.

### Description of the Background Art

A hydraulic excavator, as an example of the work machine, is a automotive work machine which has vehicular base structure consisting of a crawler- or wheel- type running means. An upper swiveling structure is provided on the vehicular base structure through a swivel device. The upper swiveling mechanism is equipped with a working mechanism for performing excavation of earth, soil and the like. The working mechanism consists of a boom connected to the upper swiveling structure for making swing action to rise up and fall down, and an arm rotatably connected to the fore end of the boom, further a bucket for excavation of earth and soil as an attachment is coupled at a tip end of the arm by means of a link mechanism. A multi-joint working mechanism is thus constructed.

A surroundings monitoring device is conventionally installed for an automotive work machine in order to secure a safety of the works and to improve the operability of the work machine by performing surveillance of s surrounding situations of the upper swivel structure. The surroundings monitoring device is so constructed as to provide a camera or cameras on the upper swiveling structure and a monitor installed at an anterior position of an operator seat sit by an operator (driver) in an operator's cab. The monitor is projected video image taken by a camera.

In this connection, the camera is fixedly mounted on the upper swiveling structure, thereby being limited the visual field of the camera. It is a matter of course to assure a frontward view at a position subject to a working field, plural cameras are provided on the upper platform to secure backward view, and both rightward and leftward view. Thereby, the safety of works is ensured and the operation ability of the work machine is improved by getting view substantially over all around the upper swiveling structure.

Such the surroundings monitoring device of the work machine is disclosed in a Patent Document 1. According to the technology of the Patent Document 1, a hydraulic excavator is mounted cameras for taking images rightward, leftward and backward directions, and showing images in the form of virtual view images (bird-eye view) for converting the view point to the vertically upper position. Distance from the work machine to a movable or stationary obstacle can be found with reference to the display showing the virtual view image.

### Prior Art Document

### Patent Document

Patent Document 1: JP-A-1 2008-248613

### Summary of the Invention

### Problem to be solved by the Invention

As described in the Patent Document 1, the distance between an obstacle and the work machine may obviously and precisely be recognized by showing the virtual view image by setting the view point over the top of the work machine. The operator can confirm the status surroundings of the work machine in view of the above mentioned image, thereby bringing out the remarkable result to improve the safety of the workings effectively. The Patent Document 1 prepares a panorama image composed of plural number virtual view images produced by respective cameras and the displaying panorama image is produced by overlaying a present and a past panorama images.

By the way, due to the panorama image is created by composing plural virtual view images, the source images are derived from cameras taking images at different fields. In other words, the virtual view image consists of images expedited from plane views of upper view point in replace of respective camera images. In this instance, the view field of rearward camera is partially overlapped with the both sideward cameras so that boundary areas between the rearward image and adjacent sideward images are overlapped partially.

The virtual view image is the image which is converted to plan view by the view point virtually from an upper position, whereby stereographic object may be disappeared the upper portion (higher portion than ground) when the stereographic object is placed at the boundary of the adjacent virtual view images. In this case, the upper portion of the stereographic object is not shown on the panorama image consisting of the composite virtual view point image. As a result, the operator is not able to recognize the presence of an obstacle due to be disappeared it from the virtual view point image, although a static or movable object do actually present around the work machine.

In addition, the stereographic object is not displayed partially but not totally from the virtual view image, due to the object is placed at the boundary position of the adjacent virtual view image. In this circumstance, the entity of obstacle appears partially on the virtual view image, while being disappeared partially out of the virtual view image. In a case where the entity is partially shown on the virtual view image, the operator may possibly overlook the presence of the obstacle unless watching the view image carefully. Therefore, the operator cannot recognize the obstacle intuitively, thus insufficient to watch the surroundings of the work machine for the sake of surveillance.

Accordingly, the object of the present invention resides in improving the safety and working efficiency are improved by bringing up to be monitored the situation surrounding the work machine in a precise and excellent visible manner.

### Means for Solving the Problem

In accordance with the present invention, in order to achieve the above-stated object, there is provided surroundings monitoring device for a work machine for surveying surroundings of the work machine having a vehicular base structure connected rotatably with a swiveling structure provided of a front working mechanism comprising: a plural number of cameras mounted on said swiveling structure, respective two cameras being partially overlapped their view angle with each other; a view point converter to generate virtual view point images from camera images of said respective cameras by converting their view points; an image composer to compose a composite image from respective virtual view point images addressed to corresponding display areas; a display image generator to generate a display image, in addition to said composite image as a first image, a second image taken by one of said cameras including opposite boundaries of said virtual view point images; and a monitor to display both of said first and second images prepared by said display image generator.

In accordance with the surroundings monitoring device, the monitor is shown both the first image and the second image, thereby the presence of an obstacle can be certainly recognized from the second image, even though the obstacle being partially or entirely disappeared out of the virtual view image due to the obstacle is exist at the boundary portion between the virtual view images obstacle. Therefore, an operator is able to recognize the situation around the work machine precisely and with the excellent visibility, thus ensuring safety and improvement of the efficiency of the work.

Also, the display image generator is so designed as to indicate superposedly on the second image addressed to the respective virtual view image areas.

By superposing over respective positions of the virtual view image in the area to define the region for each of the virtual view images in the displaying system of the second image, the operator may be ensured to recognize the possibility of lost appearance of an obstacle taking in consideration with the scope of the displaying area of the virtual view image and the obstacle. Therefore, the safety and the efficiency of the work may further be improved in the status around the work machine more precisely with excellent visibility.

Further, the display image generator is characterized to make superpose on the second image for a region to be likely disappeared the upper portion of a stereographic object at the boundary portion between the adjacent virtual view images.

To indicate superposition on the second image at the areas of the virtual view image for the adjoined position of the respective virtual view image areas as a possible lost appearance region which may lose appearance the stereographic object, the operator can recognize the possibility of lost appearance of the obstacle as to whether or not actually resides the obstacle. Therefore, the safety and the efficiency of the work may further be improved in the situation around the work machine more precisely with excellent visibility.

The display image generator makes superpose on the second image the liable lost appearance region which may be disappeared the upper portion of the stereographic object out from the virtual view image region and the adjacent virtual view image composite region in the different manner with respect to the virtual view image area and the liable lost appearance area.

By displaying the virtual view image area and the liable lost appearance area simultaneously, the operator can recognize the relationship of the obstacle with respect to the virtual view image area and the liable lost appearance area. Therefore, the safety and the efficiency of the work may further be improved in the situation around the work machine more precisely with excellent visibility.

Further, the display image generator is allowed to show the virtual view image region and/or superporsedly on the second image the liable lost appearance region which may lose the appearance of the upper portion of the stereographic object out from the virtual view image area and the adjacent virtual view image composite area, and showing in different manner for the composite region of the second image and for the liable disappeared region in a case of simultaneous images, and being adapted to select a mode either to indicate both the region of the second image or the liable disappeared region, a mode to indicate the second image and the liable disappeared area simultaneously, or a mode to show no indication.

An unskilled operator can be assisted to recognize the possibility of the lost appearance an obstacle by indicating either or both of the virtual view image region and the liable lost appearance region. While, it is no necessity to indicate both the virtual view image and/or the liable lost appearance area for a skillful operator to recognize the presence of the obstacle, due to the indication brings to suppress the visibility of the second image. Therefore, the one can be selected optimum display manner based upon the skilled revel of the operator.

There is provided an obstacle detector to detect an obstacle in light of the camera image acquired from the camera, and the display image generator creating a marking around the obstacle detected from the obstacle detector on said first image and/or said second image.

By creating and superposing the marking to be indicated the obstacle on the first or second view image, the operator can recognize the obstacle by means of the marking, even though the obstacle is partially disappeared from the virtual view point image. Therefore, the operator can certainly be recognized the obstacle, thus ensuring to recognize the situation around the work machine.

### Effects of the Invention

In accordance with the present invention, since a monitor is displaying not only the virtual view point image cinematographic by a camera but also the original camera image before converting the virtual view point image, an operator can recognize an obstacle from the camera image, even if the upper portion of the stereographic object is disappeared out due to the stereographic object resides at the position between the boundary portion between the adjacent virtual view point images. Therefore, the operator can recognize the situation around the work machine more precisely with excellent visibility, the safety and the efficiency of the work may further be improved.

### Brief Description of the Drawings

[Fig. 1] is a diagrammatic view of a hydraulic excavator as an example of a work machine.
[Fig 2] is a front elevation view of the hydraulic excavator.
[Fig. 3] is a schematic view image of an example of monitor shown a view image of a camera selected as a surveillance camera.
[Fig. 4] is a block diagram of a display controller and respective equipments connected to the display controller.
[Fig. 5] is an exemplary schematic view shown a view image selected by the right side camera.
[Fig. 6] is an exemplary schematic view image shown a view image selected by the rearward camera.
[Fig. 7] is an exemplary schematic view image shown a view image selected by the left side camera.
[Fig. 8] is an exemplary schematic view of the monitor when the upper swinging structure is rotated.
[Fig. 9] shows the contents superposed on camera through images of respective patterns.
[Fig. 10] shows an exemplary display of the monitor in pattern A.
[Fig. 11] shows an exemplary display of the monitor in pattern B.

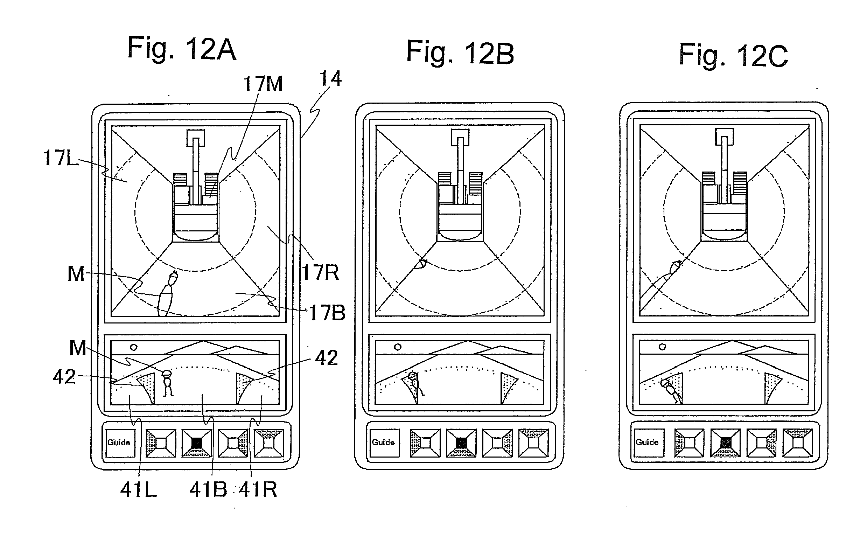

[Fig. 12] shows an exemplary display of the monitor in pattern C.
[Fig. 13] is a modified example of a block diagram of a display controller and respective equipments connected to the display controller.
[Fig. 14] shows an exemplary display of the monitor modified pattern D.
[Fig. 15] shows an exemplary display of the monitor modified pattern A.
[Fig. 16] shows an exemplary display of the monitor modified pattern B.
[Fig. 17] shows an exemplary display of the monitor modified pattern C.

### Embodiment of the Invention

Embodiments of the present invention will be described below with reference to the attached drawings. Hereinafter, a hydraulic excavator having a clawler-type traveler is referred to as an example as a work machine, while being applicable other work machine such as a while-roader and the like. Further, the traveler system may be wheel type one.

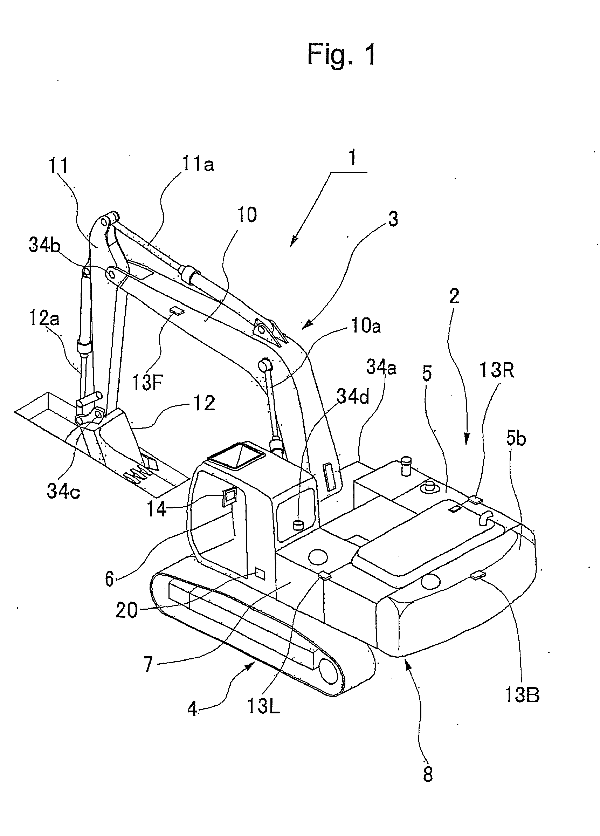

As shown in Fig. 1, hydraulic excavator 1 has a vehicle body 2 and a front working mechanism 3. The vehicle body 2 has a vehicular base structure 4 and an upper swiveling structure 5, further a swivel mechanism is provided between the vehicular base structure 4 and the upper swiveling structure 5. The upper swiveling structure 5 has an operator's cab 6 for operating the hydraulic excavator by the operator, and the front working mechanism 3 for excavation earth and sand out of earth stands is provided substantially in row at the right side of the operator's cab 6 on the upper swiveling structure 5. A machinery room 7 and the like are placed behind the operator's cab 6 and the front working mechanism 3 on the upper swiveling structure 5, a counterweight 8 is provided at the rearmost position.

The working mechanism 3 is adapted to excavating earth and sands consisting of a boom 10, arm 11 and a bucket 12. The boom 10 is adapted to move rising up and falling down by pivotally connected with a connecting pin to the upper swiveling structure 5. The arm 11 is connected to the tip end of the boom 10 in the manner so as to make rotational movement, further the bucket 12 is rotatably connected to the top end of the boom 10. The tilting movement of the boom 10 is caused by driving a hydraulic cylinder 10a. Also, the arm 11 is driven by an arm cylinder 11a, and the bucket 12 is driven by a bucket cylinder 12a.

The operator performs operation in the operator's cab to take a posture of facing forward so that sufficiently wide view is provided forward the upper swiveling structure 5. Also, view for front oblique right is attained from the operator's cab. As to the rightward view, the operator cannot see back oblique direction directly without turn back. As regarding the left side of the operator's cab, the operator substantially cannot has no visibility due to prevented greater part of the view field by the boom 10.

With respect to the backward direction of the upper swiveling structure 5, there are placed the machinery room 7 and the counterweight 8, therefore the operator has no visibility unless taking turn back posture in the operator's cab 6. In addition, since the upper surfaces of the machinery room 7 and the counterweight 8 are tall, the visual field is allowed for far distance, but not visible near the upper swiveling structure 5.

For ensuring the supplemental visibility, a camera 13B (rearward camera 13B), a camera 13R (right side camera 13R), a camera 13L (left side camera 13L) are provided for surveillance of the back, right and left directions of the upper swiveling structure 5. Practically, the rearward camera 13B is provided at an approximately center of the counterweight 8, rightward camera 13R is provided at the upper right side of the machinery room 7 and the leftward camera 13L is provided at the left side of machinery room 7 or a top portion of an oil tank.

The rearward camera 13B is captured the view image of the wide range of the backward direction from the upper swiveling structure 5, and the operator is able to have view field substantially all around other than the fore direction with unstrained posture in the operator's cab by the provision of the left side camera 13L and right side camera 13R in addition to the rearward camera 13B.

Respective lenses of the cameras 13B, 13R and 13L are so designed as to overlap the fields of view with each other depending upon their view angles of lenses and their positions. Actually, the view angle of the rearward camera 13B is partially overlapped with the view angles of left and right cameras at each end portions.

In addition, a monitor 14 is provided inside the operator's cab to display the images from the cameras 13B, 13R, 13L as moving image. The camera images acquired from respective cameras 13B, 13R, 13L are displayed in the monitor 14 without processing (camera through image), or adapted to be shown as processed images to convert the view point from the upper position (virtual view point image). The camera through image and the virtual view point image may be displayed simultaneously on one single screen.

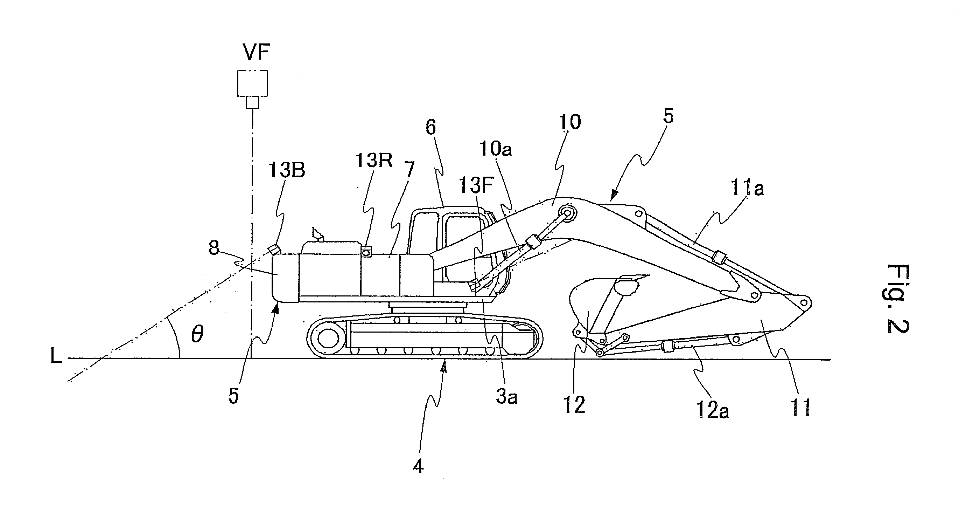

Now, taking the rearward camera 13B as an example, as shown in Fig. 2, the optical axis of the objective lens in the rearward camera 13B is turned to downward inclination having an angle θ from the upper swiveling structure 5 toward the rearward direction. In this situation, when the vehicular base structure 4 of the hydraulic excavator 1 is placed on the ground level L, a camera view image is acquired having angle θ relative to the ground level L. A virtual view point image is produced by converting coordinate in a virtual view point VP directed to the vertical optical axis (orthogonal to the horizontal plane) of a virtual plane as the ground level L. That is to say, the virtual view point image is a virtual image to see from above at the virtual view point VP toward the ground level L.

Thereby, the monitor 14 is displayed the virtual view point image (or bird-eye image) converted from the camera image having the downwardly inclined angle 8. Also, the angle of the left and right side camera 13R and 13L are inclined angle θ to the ground level L, same as the rearward camera 13B. Specifically, the rearward camera 13B and the left and right side cameras 13R and 13L are placed at the different positions respectively at the angle of substantially 90 degree on the ground level L as the virtual plane. In other words, the image pickup directions of the cameras 13B, 13R, 13L are differed at the angle of 90 degree from each other.

Although the view angles of the cameras 13B, 13R, 13L are placed at the angle of 90 degree from each other in this embodiment, the view angles may be arbitrary other than 90 degree, provided with mutually in different view directions. Further, respective cameras 13B, 13R and 13L are placed at optional positions of the upper swiveling structure 5.

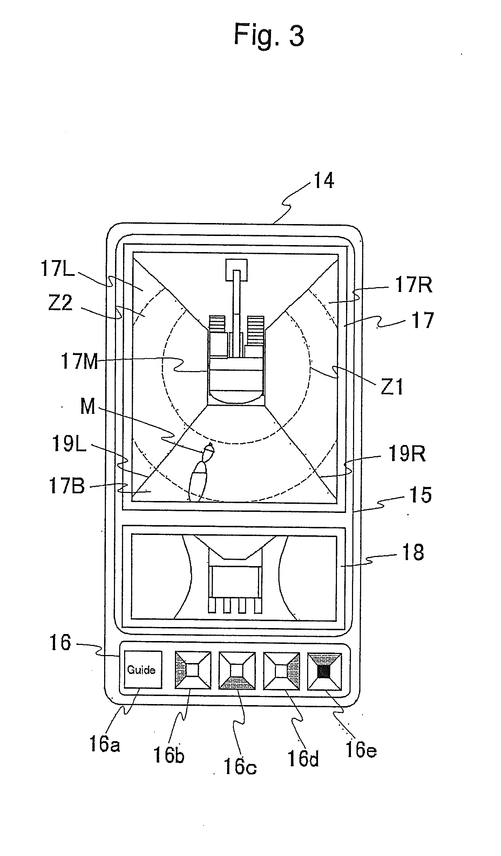

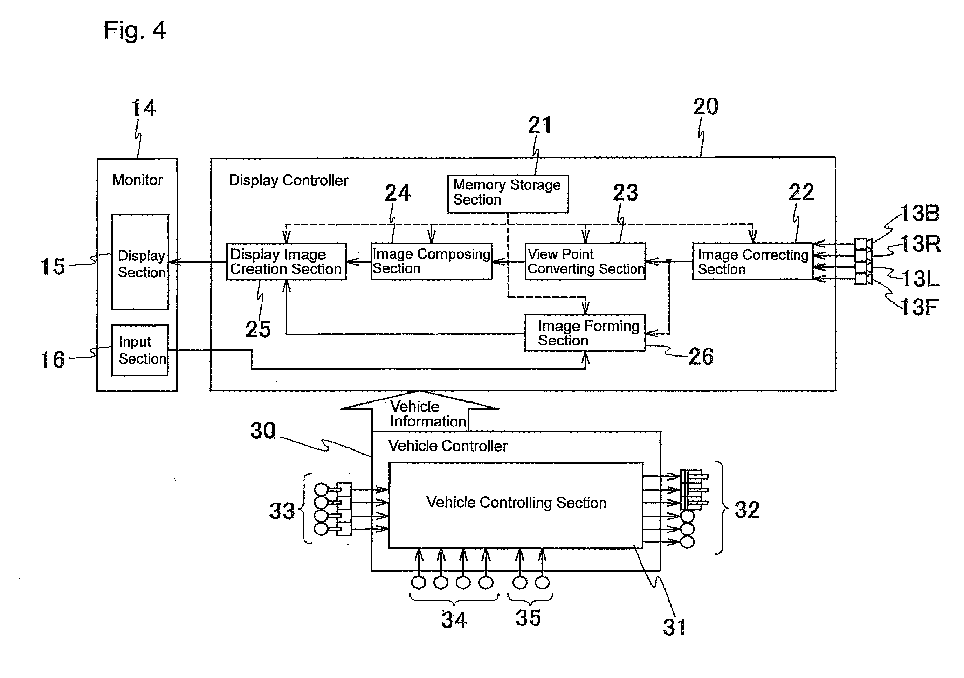

Fig. 3 shows the construction of the monitor 14. As shown in Fig. 4, the monitor 14 comprises a display section 15 and an input section 16 having switches. The display section 15 has a virtual view point image displaying area 17 and a camera through image displaying area 18. The virtual view point image is a first image that the work machine picture image 17M which is a graphic of a plane view of the hydraulic excavator is placed at the center position. The virtual view point images acquired from the cameras 13B, 13R, 13L to be converted the view point are displayed around the plane view of the work machine picture image 17M.

The virtual view point images consist of a virtual rearward view point image 17B based upon the camera image acquired from the rearward camera 13B, a virtual right side view point image 17B on the basis of the camera image acquired from the right camera 13B, a virtual right side view point image 17R on the basis of the camera images acquired from the right camera 13R, and a virtual left side view point image 17L on the basis of the camera image acquired from the left camera 13L. In addition, a boundary line 19R is formed at the border position between the virtual rearward view point image 17B and the virtual left side view point image 17R, and a boundary line 19L is formed at the border position between the virtual rearward view point image 17B and the virtual left side view point image 17L.

On the other hand, the camera through image is displayed on the camera through image displaying area 18. The camera through image is a second image that one of the images is displayed from one of the rearward camera 13B, the right side camera 13R or the left side camera 13L before converting the view point. Therefore, the camera through image is the image acquired from the camera itself.

Therefore, the monitor 14 is displayed the virtual view point image and the camera through image. A display controller 20 for controlling the displaying the monitor 14 is shown in Fig. 4. As apparent from the drawing, the display controller 20 comprises of a memory storage section 21, an image correction section 22, a view point converting section 23, an image composing section 24, a display image creation section 25 and an image forming section 26. The display controller 20 is connected with a vehicle controller 30 having a vehicle controlling section 31 and is obtained vehicle information from the vehicle controller 30.

The memory storage section 21 has stored various information including, the field angle of the cameras 13B, 13R, 13L, parameters of the camera optical system such as the lens distortions, the information as to the positions and the postures of the cameras, information regarding the virtual view point for converting to the virtual view image as more detailed explanation hereinafter, the work machine image 17M to be displayed and its scale factor and the like.

The image correction section 22 is connected to cameras 13B, 13R, 13L to perform image correction, such as distortion, contrast correction, color correction and the like, for the camera view acquired from the rearward camera 13B, the right side camera 13R and the left side camera 13L by using parameters of the camera optical system stored in the memory storage section 21.

The view point converting section 23 carries out the view point conversion of the camera images which are corrected the camera images in the image correction section 22. In this connection, the view point conversion being carried out for the camera images acquired from the rearward camera 13B, the right side camera 13R and the left side cameras 13L, but not processing a camera image acquired from a bucket observation camera 13F. As a result, the virtual rearward view point image 17B, the virtual right side view point image 17R and virtual left side view point image 17L are acquired at the rearward and both sides by the forgoing view point conversion processes.

The virtual view point image displaying area 17 is divided into image area zones for the virtual rearward view point image 17B, for the virtual right side view point image 17R and for virtual left side view point image 17L, and respective images are displayed on the allocated area zones. In other words, the work machine image is placed at the center position and at the rearward position being allotted the virtual rearward view point image 13B, at the left side position being allotted the virtual left side view point image 13L, at the right side position being allotted the virtual right side view point image 13L, respectively.

The image composing section 24 performs the allocation of the virtual rearward view point image 17B, the virtual right side view point image 17R and the virtual left side view point image 17L. In other words, the image composing section 24 composes respectively of the virtual rearward view point image 17B, the virtual right side view point image 17R and virtual left side view point image 17L after the completion of view point conversion in the view point converting section 23. Eventually, a virtual view point image is composited. Then, the boundary line 19R at the border position between the virtual rearward view point image 17B and the virtual left side view point image 17R, and the boundary line 19L at the border position between the virtual rearward view point image 17B and the virtual left side view point image 17L are indicated on the image.

As shown in Fig. 3, a dangerous zone Z1 and an attention zone Z2 are shown on the composite virtual view point image in the virtual view point image displaying area 17 composited by the virtual rearward view point image 17B, the virtual right side view point image 17R and virtual left side view point image 17L. The dangerous zone Z1 is a circle zone in which the hydraulic excavator 1 may be contacted with an obstacle (stationary or movable) to be avoided crash. The dangerous zone Z1 is defined in accordance with the swiveling area for the tip of the arm 11 of the front working mechanism 3 with a standard swiveling posture.

Further, the attention zone Z2 is a ring area placed outside the circular area of the dangerous zone Z1 for bringing attention to the operator. The outer end of the attention zone Z2 is normally set for the dimension approximately twice radius larger than the circle of the dangerous zone Z1. Although the dangerous zone Z1 is nearly matched with the area of the virtual view point image area 17, broader area may be set than the dangerous zone Z1.

As shown in Fig. 4, the camera image upon processed the correction in the image correction section 22 is outputted to the image forming section 26. Four corrected camera images (the camera images from the rearward camera 13B, the left side camera 13L, the right side camera 13R and the bucket observation camera 13F) are inputted to the image forming section 26 and one camera image is selected from these four camera images. The selecting operation is performed by the input section 16 set at the monitor 14.

That is, the input section 16 is composed of 4 switches 16a, 16b, 16c, 16d and 16e, wherein the switch 16a has a function to select One of patterns explained hereinafter. And, the switch 16b is a switch to select the camera image of the left side camera 13L, the switch 16c is a switch to select the camera image of the rearward camera 13B, the switch 16d is a switch to select the camera image of the right side camera 13R and the switch 16e is a switch to select the camera image of the bucket observation camera 13F.

On the basis of input from one of the switches 16a - 16e, one camera image is selected from the camera images in the image forming section 26. The image forming section 26 makes proceed to superpose a virtual view point region and/or a disappeared region hereinafter referred. The virtual view point region and the disappeared region are adapted to superpose in the form of a guide symbol on the camera image. The pattern of the guide symbol is selected from the operation of the switch 16e. The camera image processed in the image forming section 26 is outputted to the display image forming section 24 as the camera through image.

As shown in Fig. 4, the two images of the virtual view point image processed in the image composing section 24 and the camera through image processed in the image forming section 26 are inputted to the display image creation section 25. The display image creation section 25 creates the virtual view point image collected three images (the virtual rearward view point image 17B, the virtual right side view point image 17R and the virtual left side view point image 17L) around the work machine image 17M positioned in the center. The virtual view point image is shown on the virtual view point image displaying area 17.

In addition, the camera though image inputted from image forming section 26 is shown on the camera through image displaying area 18. Therefore, the monitor 14 is simultaneously displayed on the display section 15 (monitor screen) the virtual view point image and the camera through image at upper and lower sides. The output to the display section 15 of the monitor 14 is, therefore, the virtual view point image and the camera through image for the sake of display image.

And, as shown in Fig. 4, the display controller 20 is connected the vehicle controller 30 and is inputted various vehicle information from the vehicle controlling section 31 of the vehicle controller 30. The hydraulic excavator 1 is provided with hydraulic cylinders 10a, 11a and 12a for the boom 10, arm 11 and bucket 12, also being provided hydraulic motors for driving the travelling means of the vehicular base structure 4 and a swiveling motor for bringing swivel movement of the upper swiveling structure. The hydraulic cylinders, the hydraulic motors and the swiveling motor are collectively called as hydraulic actuators, as shown in Fig. 4 represented by a hydraulic actuator group 32.

And, an operation lever group 33 consisting of plural number of operation levers are disposed in the operator's cab 6, when either one operation lever is operated in the operation lever group 33 is operated, the relevant information is transferred to the vehicle controlling section 31, then corresponding hydraulic actuator in the hydraulic actuator group 32 is actuated on the basis of the command from the vehicle controlling section 31. In this connection, although the command from the vehicle controlling section 31 is transferred as an electric signal directly to the hydraulic actuator group 32, the command itself may be by hydraulic signal and be transferred the signal as to operation quantity value by the vehicle controlling section 31.

Further, the vehicle controller 31 has a rotational angle detector group 34 consisting of angle detectors 34a, 34b, 34c, 34d to detect the relative angles of the boom 10, the arm 11 and the bucket 12, and swiveling angle between the upper swiveling structure 5 and vehicular base structure 4. The angle detector 34a detects the rotational angle of the boom 10, the angle detector 34b detects the rotational angle of the arm 11, the angle detector 34c detects the rotational angle of the bucket 12, and the angle detector 34d detects the swiveling angle of the upper swiveling structure 5 to the vehicular base structure 4. In addition, speed meters 35a and 35b are provided as travelling speed detector group 35 to detect the rotational speed of the both travelling motors 5a and 5b of the vehicular base structure 4.

The vehicular controller 31 receives various information from the hydraulic actuator group 32, the operation lever group 33, the rotational angle detector group 34 and the travelling speed detector group 35 to output the vehicle information for the display controller 20. The display controller 20 confirms the posture information, travelling speed information, operational situation information and the like based upon the vehicle information.

The foregoing explanations relate to the construction. Hereinafter makes reference to the operation. As shown in Fig. 3, one of switch in switches 16a-16e which are provided on the input section 16 of the monitor 14 is operated by the operator boarded in the operator's cab 6. As already explained, the switches 16a-16e are provided to show one of camera image acquired by the cameras 13L, 13B, 13R or 13F on the camera through image displaying area. Switches 16a-16e are so arranged as to visually corresponding to the positions of the cameras 13L, 13B, 13 R and 13F.

In the embodiment, the switches 16a-16e have the center part which causes to light up selected one, and divided into 4 part at upper and lower, right and left around the center part. The direction parts around the center part denote, respectively, to represent the selected image to be acquired from the cameras 13L, 13B, 13R or 13F. The switch 16b is marked at the left side part so that image of the left side camera 13L is selected. The switch 16c is marked at the lower part so that image of the rearward camera 13B is selected. The switch 16d is marked at the fight side part so that image of the right side camera 13R is selected. The switch 16e is marked at the upper part so that image of the bucket observation camera 13F is selected.

As explained above, the center parts of the switches 16a-16e are adapted to light up so that the lightening exhibits definitely in which switch is operated of the switches 16a-16e by the operator. Further, other appropriate representing methods can be adopted to denote that each camera image acquired from the cameras 13B, 13L, 13R, 13F corresponds to the switches 16a-16e.

In the example of Fig. 3, the operator pressed the switch 16e. Therefore, it denotes that the bucket observation camera 13F is selected, and the switch 16a is selected from lightened the center part. The selection done for the switch 16e is outputted to the image forming section 26.

The image correction section 22 of the display controller receives data of the camera images from the cameras 13B, 13L, 13R, 13F and makes correction process on the camera images. The corrected camera images of the cameras 13B, 13L, 13R, 13F are subjected to carry out the view point conversion process in the view point converting section 23 to produce the virtual rearward view point image 17B, the virtual right side view point image 17R, the virtual left side view point image 17L. Then, the image composing section 24 composes the virtual rearward view point image 17B, the virtual right side view point image 17R, the virtual left side view point image 17L to produce an composed virtual view point image. The display image creation section 25 brings to add the work machine image 17M at the center position of the composed virtual view point image.

In addition, the image forming section 26 selects the camera image made of the correction processed in the image correction section 22 defined by switch 16e for the bucket observation camera 13F, and the selected camera image is transmitted to display image creation section 25. Meanwhile, although the image forming section 26 is adapted to superpose virtual view point region and/or the disappeared region onto the camera image, the superposition is not performed in a case where the bucket observation camera 13F is selected for the sake of displaying.

The display image creation section 25 is inputted the camera image that the virtual view point image composed on the image composing section 24 together with the work machine image 17M added therein and the camera image processed in the image forming section 26. Then, the virtual view point image is shown on the virtual view point image displaying area 17. In other words, the virtual view point image displaying area 17 is displayed the composite virtual view point image consisting of the virtual right side view point image 17R, the virtual rearward view point image 17B and the virtual right side view point image 17R around the work machine image 17M.

On the other hand, the camera through image from the bucket observation camera 13F is displayed on the camera through image displaying area 18. The camera through image is not subjected the view point converting process but the view image from the bucket observation camera 13F. The image forming section 25 makes transmit the virtual view point image and the camera through image to the display section 15. The above-mentioned image is displayed on the display section 15 as illustrated in Fig. 3.

In this stage, the selection of the switch 16e is visually indicated from the switches 16a-16e in the input section 16. The switch 16e denotes to be selected that the image of the bucket observation camera 13F, thus the operator can directly recognize that the camera though image on the camera thought image displaying area 18 is the image from the bucket observation camera 13F.

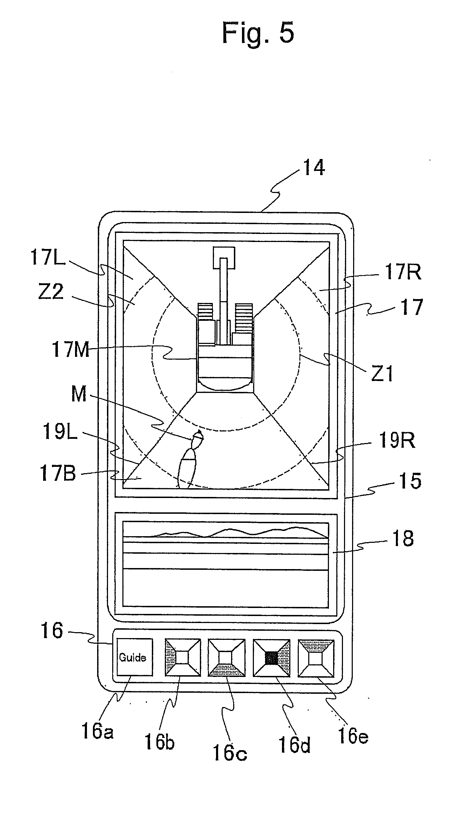

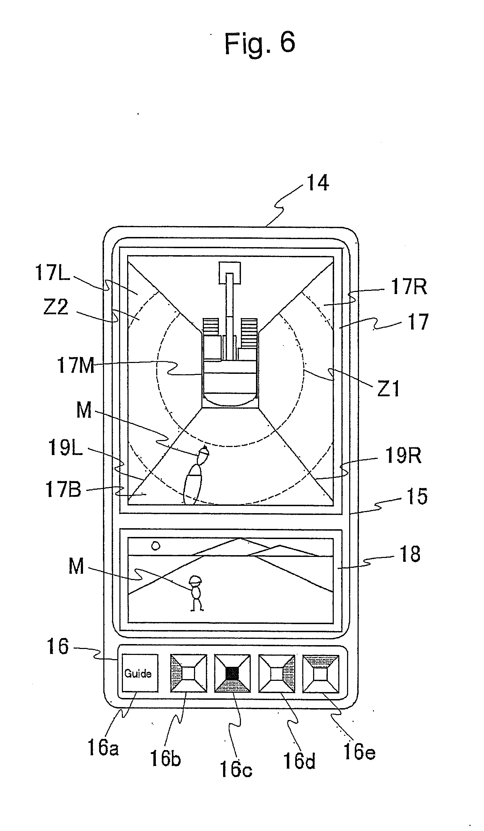

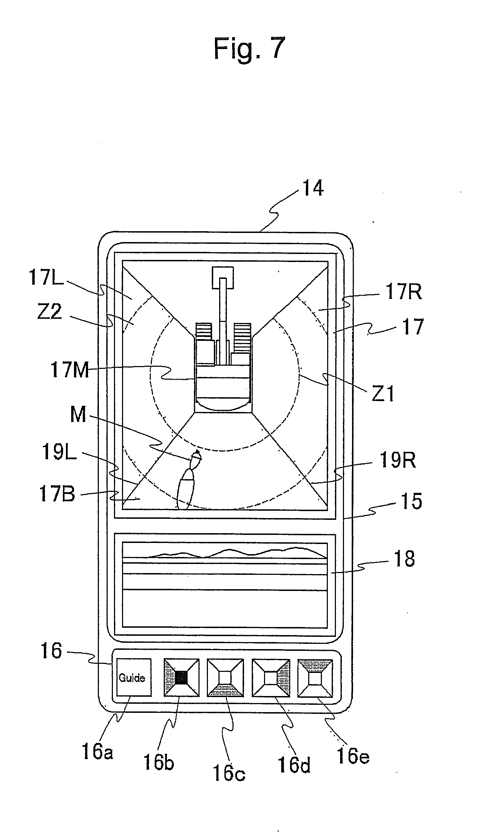

Then, when the operator pressed the switch 16d, the operator recognizes that the camera though image corresponding to the switch 16d, that is, the camera image from the right side camera 13R is displayed on the camera thought image displaying area 18. Fig. 5 shows the monitor 14 at the time of pressed the switch 16d. Fig. 6 shows the display image of the monitor at the time of pressed the switch 16c. In this case, the camera though image from the backward camera 13B is shown on the camera thought image displaying area 18. Further, the monitor 14 is illustrated in Fig. 7 at the time pressed on the switch 16b. Thereby, the camera though image from the left side camera 13L corresponding to the switch 16b is shown on the camera thought image displaying area 18.

A worker M as stationary or movable obstacle is shown in the virtual view point image of Fig. 5 to fig. 7 and the camera through image of Fig. 6. Under this circumstance, the operator pressed the switch 16c to select the rearward camera 13B, thereby being displayed the camera through image from the rearward camera 13B on the camera through image displaying area 18. Since the worker M stands at the backward position of the hydraulic excavator, the worker M is appeared the camera through image in the camera through image in this figure.

The virtual view point image shows an elevation view on the horizontal plane from virtual upper position to the rearward camera 13B, and right and left sides cameras 13R, 13L. The worker M is placed near at the center of the camera 13B on Fig. 6, thereby the worker M is shown as an elevated posture on the horizontal plane of the virtual rearward view point image.

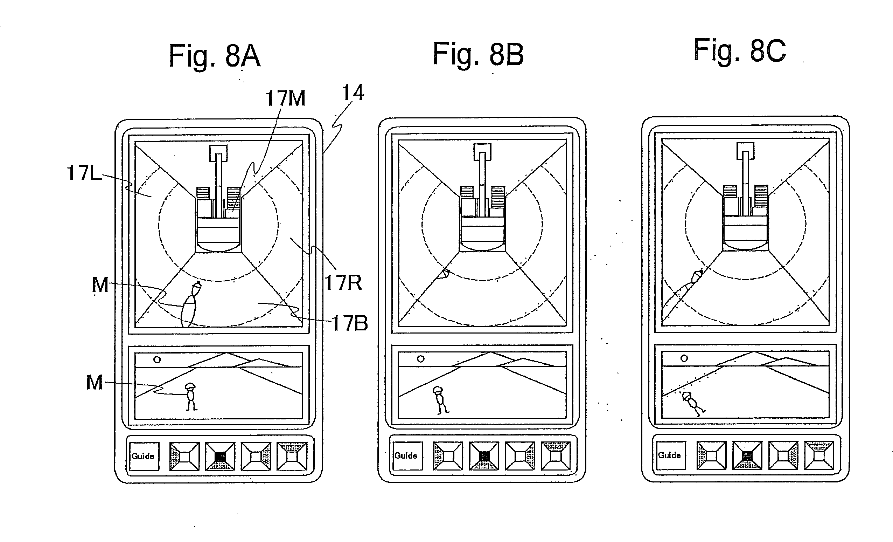

The upper swiveling structure 5 is actuated to swivel onto the vehicular base structure 4 at the time of operation by the operator one of the group of the operation levers 33. The view field of the cameras 13B, 13R and 13L are changed according to the swiveling of the upper swiveling structure 5. Fig. 8A shows the status before initiation of the swiveling movement (that is, the state of Fig.6), the camera through image and the virtual view point image are brought to change according to the swiveling movement.

By bringing about the swiveling movement from the status as shown in the same Figure A, the status becomes the same Figure C, then changing the status to the same Figure D. Therefore, the standing position of the worker M is moved from the center toward the left side in the camera through image. Also, the virtual view point image is changed depending upon the swiveling movement. Since the worker M resides within the view field of the rearward camera 13B, the worker M is shown on the virtual rearward view point image 17B.

During continuous swiveling movement, the worker M goes to enter into the boundary line 19L, while retarded partially from the virtual rearward view point image 17B. Therefore, the image of the worker M becomes to lose the appearance from the virtual view image. The virtual view point image is an elevation view in a horizontal plane taken the view point at the upper position. In this circumstance, the upper portion of the worker M is disappeared out of the virtual view point image when the worker M resides at the boundary position between the view field of the rearward camera 13B and left side camera 13L. Therefore, the worker M is hardly recognized at the boundary position of the boundary line 19L, as shown in Fig. 8B

Fig. 8C shows the position further swiveled from Fig. 8C, the operator M is completely retracted from the virtual rearward view point image 17B, but the image of the worker M being partially appeared on the virtual left side view point image 17L. Even though the image, the worker M is crossed over the boundary line 19L, thus disappeared partially. Therefore, the image of the worker M partially or entirely disappeared from the virtual view point image. Therefore, the image of the worker M is unable to recognize depending upon the position if the virtual view point image is solely displayed on the monitor 14.

In this connection, the forgoing explanation is made that the worker M is moved to the view field of respective cameras 13B, 13R and 13L on the swiveling movement of the upper swiveling structure, the worker M is disappeared out of the virtual view point image partially or entirely on the one hand keeping the upper swiveling structure 5, and on the other hand moving the worker M.

Therefore, the worker M may sometimes not be recognized only the virtual view point image. Taking into consideration of the forgoing situations, the camera through image before processing the conversion of the view point is displayed on the monitor 14 in addition to the virtual view point image. Although the worker M disappeared out of the virtual view point image partially or entirely in a case where the worker M is placed at the boundary line 19L or 19R, the camera through image is an original image before the view point conversion. The camera through image is an image acquired in the view field of the rear side camera 13B, thus accordingly the worker M includes clearly on the camera through image. Therefore, the worker M can be recognized on the basis of the camera through image, whereas the worker M is not recognized from the virtual view point image.

The virtual view point image display area 17 performs to display an virtual view point image. Therefore, the positional relationship between the hydraulic excavator 1 and an obstacle (stationary, worker M or the like) can clearly be recognized on the basis of the looking downward image around the hydraulic excavator 1 the surroundings of the hydraulic excavator 1. Thereby, the safety of the works can be secured satisfactorily by allowing to be understood the surrounding situation of the hydraulic excavator 1 exactly.

Under this situation, in a case where an obstacle stands at the boundary line 19L or 19R of the virtual view point image, the upper portion of the object having stereographic substance is likely to be lost in the virtual view point image. Therefore, the camera through image before preparing the virtual view point image is displayed just like it together with the virtual view point image, thereby the camera through image makes it clearly the presence of the obstacle even though the lost appearance of the obstacle. As a result, the operator can recognize the status surrounding the working machine precisely and sufficiently, thus contributing to improve the safety and efficiency of the work.

Followings are the explanation in a case where the switch 16a consisting of the switches in the input section 16 of the monitor 14 is pressed. The switch 16a has a function to select either displaying or not the virtual view point region and the lost appearance region. The operator selects a guide pattern representing the virtual view point region and lost appearance region. When the switch 16a is pressed, the switch 16a is lighting to acquaint it to be pressed the switch. The pattern is shifted one by one upon pressing the switch 16a.

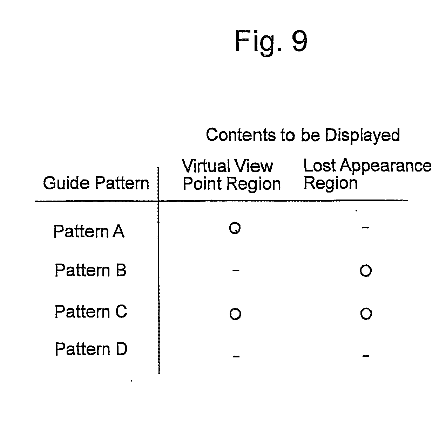

Fig. 9 shows the relationship of the guide pattern with the contents to be displayed. Every time of repeated press the switch 16a causes to shift the pattern A, pattern B, pattern C and pattern D in order, and further pressed the switch 16a at the time of displayed the pattern D. In this connection, the switch 16 does not light at the time to select the pattern D.

When the pattern A is selected by pressing the switch 16a, only the virtual view point region is superposed on the camera through image, then the pattern B is selected, only the lost appearance region is superposed on the camera through image, further the pattern C is selected, the virtual view point region and the lost appearance region are superposed on the camera through image, finally the pattern D is selected, none of the virtual view point region and the lost appearance region are superposed on the camera through image.

The switch 16a is once pressed, the pattern A is selected. That is, the virtual view point region is solely superposed on the camera through image. The image forming section 26 of the display controller 20 detects that the pattern A is selected by pressed the switch 16a in the input section 16 of the image forming section 26 in the display controller 20. The image forming section 26 is thereby to make display the image from the rearward camera 13B as a camera through image transferred from the image correcting section 22 superposed with the virtual view point region superposed.

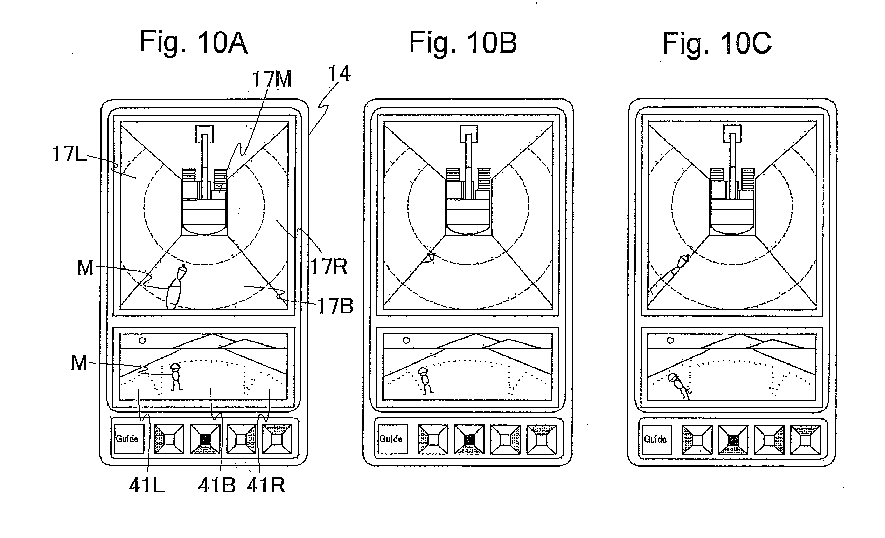

As shown in Fig. 10, the virtual view point region 41 involves the virtual left side view point image 17L, virtual rearward view point image 17B and the virtual left side view point image 17R in the contents of the camera through images. The virtual view point images are the image in the elevation of horizontal plane, the virtual rearward view point image 17B, the virtual right side view point image 17R and the virtual left side view point image 17L are included in the camera through image of the rear side camera 13B. As a result, the virtual view point region 41 includes in the camera image areas of the virtual left side view point image 17L (virtual view point left side region 41L), the virtual rearward view point image 17B (virtual rearward view point region 41B) and the virtual right side view point image 17R (virtual left side view point region 41R).

Fig. 10 shows a camera through image which is acquired by the camera 13B wherein a virtual rearward view point region 41B is indicated at the center position of the camera through image, while a virtual left side view point region 41L and a virtual right side view point region 41R are indicated partially at the left and right portions. The camera through image and respective virtual view point regions 41 has a predetermined relationship which is settled beforehand.

Therefore, the image forming section 26 determines to indicate the virtual rearward view point region 41B, the virtual left side view point region 41L and the virtual right side view point region 41R on the camera through image in the form of guide patterns. The region shown by dot line on Fig. 10 represents the guide patterns. Therefore, the operator can recognize visually the virtual rearward view point region 41B, the virtual left side view point region 41L and the virtual right side view point region 41R by means of the guide lines.

Then, in a case where the worker M is positioned at the boundary line 19L or 19R between adjacent virtual view point images, the worker M is disappeared out of the virtual view point images partially or entirely due to being distinguished the upper portion of the stereographic substance. In light of the camera through image makes, it possible to recognize whether or not a worker M stayed at the boundary area of the guide pattern, that is between virtual rearward view point region 41B and virtual right side view point region 41R, or between the virtual rearward view point region 41B and virtual left side view point region 41L. By inspecting the guide pattern as shown in Fig. 10A, it is found that the worker M is entered into the rearward view point region 41B.

Further, in a case where the upper swiveling structure 5 is going to swivel, the worker M becomes to retard from the virtual rearward view point region 41B. The operator can realize visually on the inspection of the guide pattern showing the virtual rearward view point region 41 B of the camera through image the possibility to be disappeared. In other words, even if the image of the worker M is almost missing from the from the virtual view point image, the operator can recognize from the through image that the worker M is partially disappeared due to the worker M resides at the position at the boundary line 19L.

In the situation of Fig. 10E, although the worker M stands outside of the virtual rearward view point region 41L, the operator can still recognize the presence partially in the virtual left side view point region, taking in consideration with the guide patter in the camera through image. Therefore, the operator is able to recognize the situation that the worker M is possibly disappeared from the virtual view point image due to placed at the boundary line between the virtual rearward view point image 17B and the virtual left side view point image 17L.

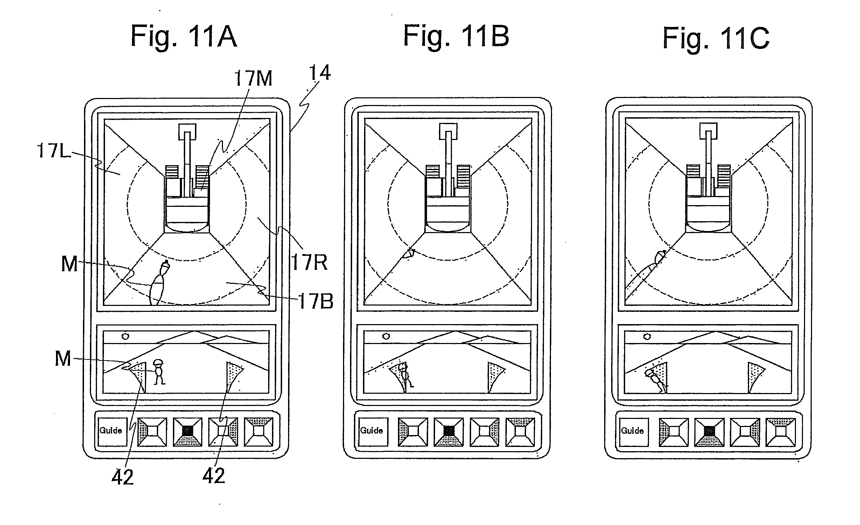

Now, the shift to pattern B is carried out by pressing the switch 6a. The lost appearance region 42 is an intermediate area between the virtual view point images which may be missing the upper portion of a stereographic object, the entity of the worker M is disappeared partially from the virtual view point image when the worker M stands in the lost appearance region 42 as shown in Fig. 11. The lost appearance region 42 is a fixed region in the camera through image similar to the virtual view point region 41 which is superposed on the camera through image by the image forming section 26.

In the camera through image, the worker M is positioned other than the lost appearance region 42 as shown in Fig. 11A, the worker M does not disappear in the virtual view point image. However, the position of the worker M is moved on the camera through image from the center toward the left side end when the upper swiveling structure 5 is swiveled. At this time, the worked M is positioned at the boundary line 19L on the virtual view point image. Thereby, the worker M is disappeared out of the virtual view point image as shown in Fig. 11B.

Further, the upper swiveling structure 5 is continued to swiveling movement, the camera through image becomes to shift to the left side end. In this situation, the worker M is going to be retarded from the virtual rear view point image region 41B, but the worker M becomes to appear on the virtual left side view point image 17L. In view of the camera through image, the worker M is positioned at the lost appearance region 42, and the entity of the worker M being partially appeared on the virtual left side view point image 17L. Therefore, the operator can recognize visually that the obstacle (worker M) is possibly to disappear from the virtual view point image by taking into consideration that the lost appearance region 42 is superposed on the camera through image.

The guide pattern for virtual view point region 41 as shown in Fig. 10 is different pattern from the guide pattern for the lost appearance region 42 shown in Fig. 11. The guide patterns in Figs. 10 and 11 are shown in dot line, but the guide patterns for the lost appearance region being half-tone meshing. The virtual view point region 41 has a meaning whether or not an obstacle is entered into there, while the lost appearance region 42 indicates the possibility of disappeared the obstacle. Therefore, the meanings of the both regions have different meanings so that the displaying mode is different between them. Needles to say, the arbitral indication modes can be adopted other them.

Then, upon pressed switch 16a, transition to the pattern C is carried out. In the pattern C, the image forming section 26 performs to superpose the virtual view point region 41 and the lost appearance region 42 on the camera through image. The lost appearance region 42 occupies the boundary areas between the virtual left side view point image area 41L and the virtual rearward view point image area 41B, and between the virtual rearward view point image area 41B and the virtual right side view point image area 41R. The virtual view point region 41 and the lost appearance region 42 are the joined areas so as to bring continuity.

Similar to the previously referred, the representation form is differed between the virtual view point region 41 and the lost appearance region 42. Therefore, the regions of the virtual view point region 41 and the lost appearance region 42 are visually identified clearly on the camera through image. Thus, the extent of the virtual view point image and the location to be disappeared out of the obstacle can be visually acknowledged by indicating the different guide patterns of the virtual view point region 41 and the lost appearance region 42.

By indicating the virtual view point region 41 and the lost appearance region 42, the extent not to be disappeared the obstacle and the extent of the lost appearance region 42 to be possibly disappeared the obstacle are recognized for the operator visually. Thereby, the operator has various information and the surroundings of the hydraulic excavator 1 makes clear more precisely.

Further, when the operator presses the switch 16a, shift to the pattern D is performed. In this situation, the switch 16a is not lightened. The pattern D is the mode that both virtual view point region 41 and the lost appearance region 42 are not indicated on the camera through image. In a case of pattern D, the image forming section 26 is inputted alone the camera image without superposing the guide pattern. Therefore, the possibility to be disappeared the worker M is not explicitly shown by the guide pattern either the virtual view point region 41 or the lost appearance region 42 on the camera through image.

However, an operator having high skill (mastery) can judge the possibility that a worker M is hidden from the virtual view point image and the camera through image. In this instance, the indication of the guide pattern on the camera through image causes rather to reduce the visibility for the skilled operator. For this purpose, the camera image of the rearward camera 13B is solely displayed without the guide pattern.

On the contrary, indication of the guide pattern of the virtual view point region 41 and lost appearance region 42 on the camera through image brings to recognize certainly with excellent visibility by selecting the pattern A. B or C.

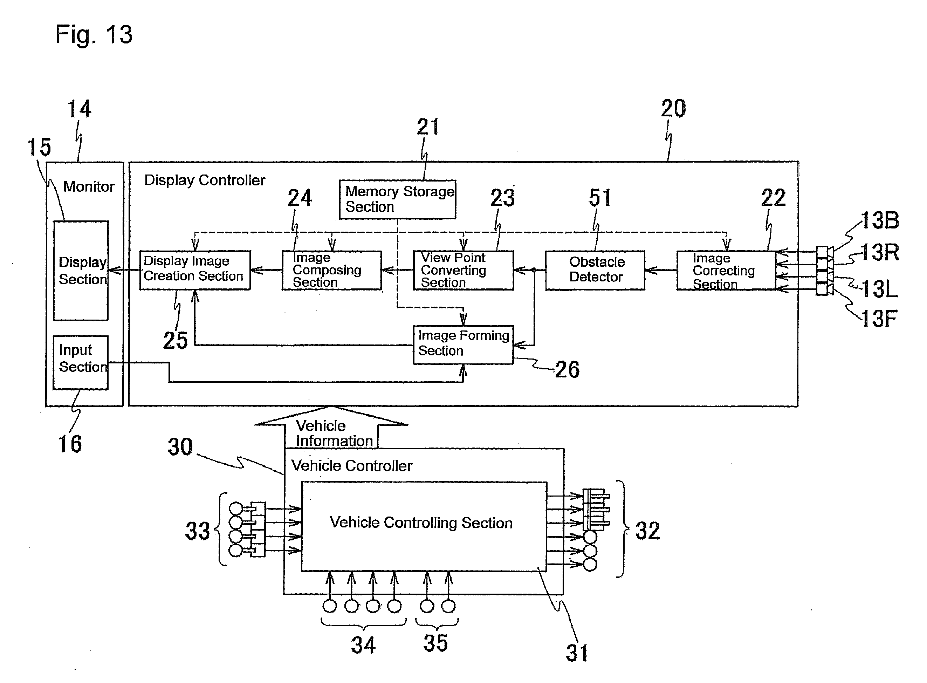

Hereinafter referred to the modification. Fig. 13 shows the display controller 20 of the embodiment. The display controller 20 is added an obstacle detector 51 to the display controller 20 of Fig. 4. The other components are same as the display controller 20 of Fig.4. The obstacle detector 51 is provided subsequent to the image converting section 22 to output the camera image after completion of obstacle searching process to the view point conversion section 23 and the image forming section 26.

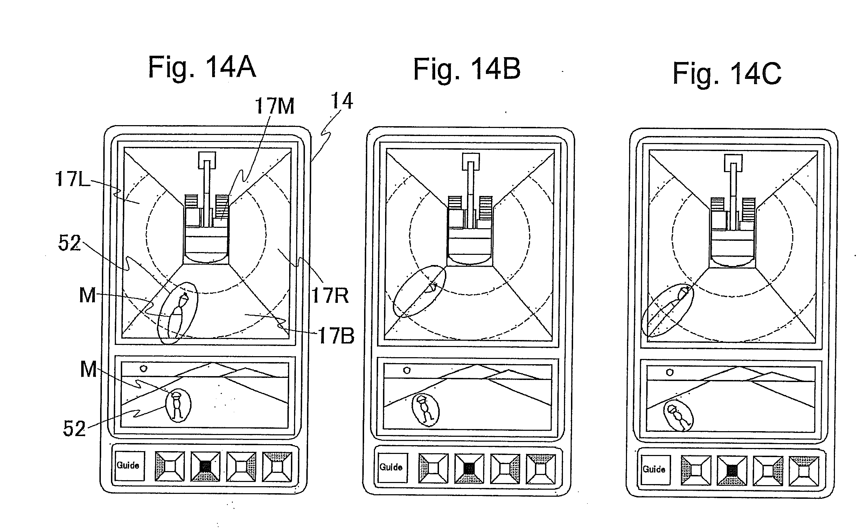

The obstacle detector 51 detects any feature point of an obstacle (worker, vehicle and the like) from the camera image processed of the image correcting section 22 and superposes a marking 52 around the detected obstacle. An elliptic mark 52 is superposed on the virtual view point image and the camera through image on the worker M in the pattern M of the Fig. 14. The mark 52 is surrounded around the obstacle and may be other form such as circle or tetragon.

In the Fig. 14A shows that the virtual point image and the camera through image are superposed the elliptic mark 52 surrounding to the worker M. The upper swiveling structure 5 is swiveled from this status the entity of the worker M is positioned toward boundary line 19L as shown in Fig. 14B and the worker M is moved in the camera through image from the center toward the end. Thereby, the entity of the worker M is hardly confirmed due to be disappeared out of the virtual view point image. However, the operator can recognize in light of the mark 52 indicated the mark 52 surrounding the worker M. The mark 52 surrounding the worker M is indicated on the camera through image, thereby the operator can recognize the presence of the worker M.

The case of Fig. 14C is similarly, the worker M is entirely disappeared out of the virtual rearward view point image 17B and is partially appeared on the virtual left side view point image 17L. Therefore, the presence of the worker M may hardly be recognized from the partial appearance of the worker M on the virtual left side view point image 17L. The operator is able to easily recognize presence of the worker M by means of indication the mark 52. In addition, the operator can recognize worker M on the camera through image from the mark 52 around there.

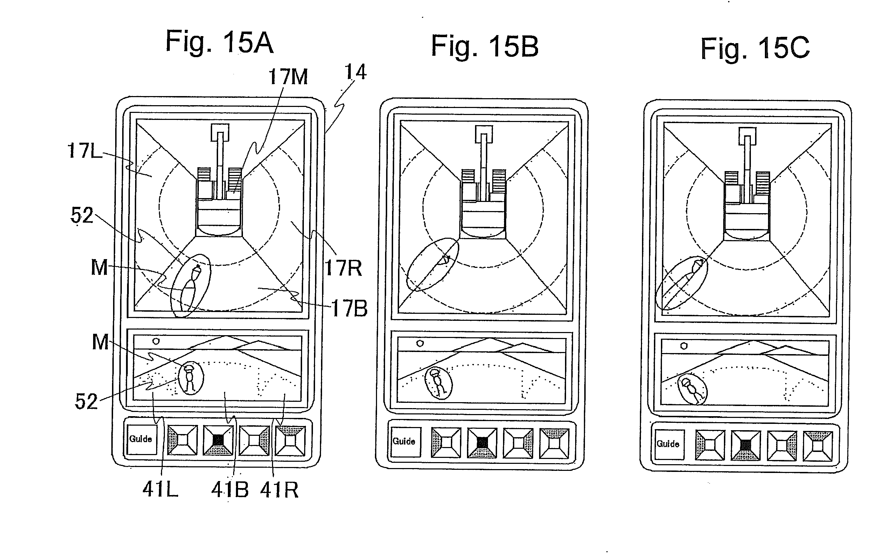

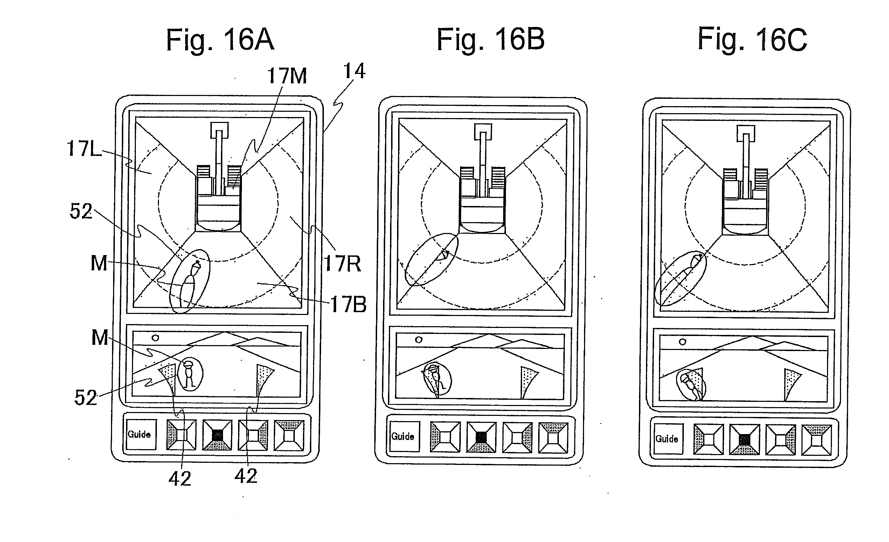

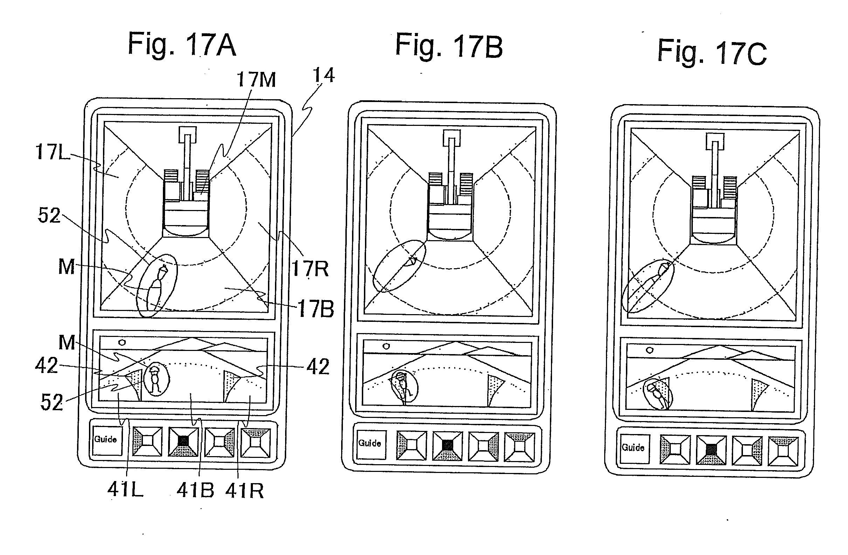

Also, the operator can recognize the presence thereof by indicating the mark 52 around the worker M on the virtual view point image and the camera through image on the pattern A of Fig. 15, on the pattern B of Fig. 16 and on the pattern C of Fig. 17. Further, the possibility of disappearance of the worker M can be recognized in accordance with the mark 52, the virtual view point region 41 and the lost appearance region 42, thereby ensuring and improving the safety of the works.

### Description of Reference Numerals

- 1:: hydraulic excavator
- 3:: front working mechanism
- 4:: vehicular base structure
- 5:: upper swiveling structure
- 6:: operator's cab
- 10:: boom
- 11:: arm
- 12:: bucket
- 13B:: rearward camera
- 13L:: left side camera
- 13R:: right side camera
- 13F:: bucket observation camera
- 14:: monitor
- 15:: display section
- 16:: input section
- 17B:: virtual rearward view point image
- 17L:: virtual left side view point image
- 17R:: virtual right side view point image
- 16a-16c:: switch
- 17:: virtual view point image displaying area
- 18:: camera through image displaying area
- 19L, 19R:: boundary line
- 20:: display controller
- 21:: memory storage section
- 22:: image correcting section
- 23:: view point converting section
- 24:: image composing section
- 25:: display image creating section
- 26:: image forming section
- 41:: virtual view point region
- 41B:: virtual rearward view point region
- 41L:: virtual left side view point region
- 41R:: virtual right side view point region
- 42:: lost appearance region
- 51:: obstacle detector
- 52:: mark

## Claims

1. Surroundings monitoring device for a work machine for surveying surroundings of said work machine having a vehicular base structure connected rotatably with a swiveling structure provided of said front working mechanism comprising:
a plural number of cameras mounted on said swiveling structure, respective two cameras being partially overlapped their view angle with each other;
a view point converter to generate virtual view point images from camera images of said respective cameras by converting their view points;
an image composer to compose a composite image from respective virtual view point images addressed to corresponding display areas;
a display image generator to generate a display image, in addition to said composite image as a first image, a second image taken by one of said cameras including opposite boundaries of said virtual view point images; and
a monitor to display both of said first and second images prepared by said display image generator.

2. Surroundings monitoring device according to claim 1, wherein said display image generator making superpose on said second image to define the displaying region of said virtual view image in said second image.

3. Surroundings monitoring device according to claim 1, wherein said display image generator making superpose an extent on said second image of a liable lost appeared region disappeared out of the upper portion of a stereographic object from image at a position between adjoining portions of the adjacent virtual view images.

4. Surroundings monitoring device according to claim 2, wherein said display image generator making superpose on said second image to define extents of said virtual view point image region and a liable lost appearance region disappeared out of the upper portion of a stereographic object from image at a position between adjoining portions of the adjacent virtual view image in a different manner.

5. Surroundings monitoring device according to claim 2, wherein said display image generator making superpose on said second image to define either one or both extents of said virtual view point image region and a liable lost appearance region disappeared out of the upper portion of a stereographic object from image at a position between adjoining portions of the adjacent virtual view image, and at the time of said virtual view point image region and said liable lost appearance region being simultaneously indicating, the indication being expressed in a different manner, and
adapted to be selected a mode to indicate either of said virtual view point image region or said liable lost appearance region, a mode to indicate both region simultaneously, and a mode not to indicate both regions.

6. Surroundings monitoring device according to claim 1, wherein an obstacle detector to detect an obstacle in light of said camera image acquired from said camera, and said display image generator,
said display image creator making superpose a mark around said obstacle detected by said obstacle detector on either one or both of said first image and said second image.

## Amended claims

### Amended claims under Art. 19.1 PCT

1. **(Amended)** Surroundings monitoring device for a work machine for surveying surroundings of said work machine having a vehicular base structure connected rotatably with a swiveling structure provided of said front working mechanism comprising:
a plural number of cameras mounted on said swiveling structure, respective two cameras being partially overlapped their view angle with each other;
a view point converter to generate virtual view point images from camera images of said respective cameras by converting their view points;
an image composer to compose a composite image from respective virtual view point images addressed to corresponding display areas;
a display image creator to generate a display image, in addition to said composite image as a first image, a second image taken by one of said cameras including opposite boundaries of said virtual view point images; and
a monitor to display both of said first and second images prepared by said display image generator;
whereby said monitor is displayed said first image composed of respective virtual view images addressed to said display areas, and said second image is shown extents inside of said virtual view image and outside partially disappeared out of said virtual view image.

2. **(Amended)** Surroundings monitoring device according to claim 1, wherein said first image is composed by a composite image at least of a virtual rearward, left side and right side view point images respectively having upward view point converted from the rearward, left side and right side cameras provided around said swiveling structure of said work machine, and said monitor is to be displayed said work machine and to be set restricted areas around said work machine for said virtual rearward view point image and said virtual left and right sides images displayed inside of the respective areas, while respective outside extents of said images are disappeared from the boundary lines between said virtual rearward view point image and virtual left and right side view point images.

3. **(Amended)** Surroundings monitoring device according to claim 2,
wherein said second image is superposed indications the extents of a virtual view point image region in said first image and a lost appearance region.
display image generator making superpose an extent on said second image of a liable lost appeared region disappeared out of the upper portion of a stereographic object from image at a position between adjoining portions of the adjacent virtual view images.

4. **(Amended)** Surroundings monitoring device according to claim 2, wherein said display image generator making superpose on said second image to define extents of said virtual view point image region and a lost appearance region in a different expression appearance.

5. **(Amended)** Surroundings monitoring device according to claim 2, wherein said display image generator is adapted to make superpose on said second image to indicate either one or both extents of a virtual view point image region and a lost appearance region, and the indication is carried out in a different expression manner, and is allowed to select a mode to indicate both region, a mode to indicate either one region, and a mode not to indicate both regions.

6. Surroundings monitoring device according to claim 1, wherein an obstacle detector to detect an obstacle in light of said camera image acquired from said camera, and said display image generator,
said display image creator making superpose a mark around said obstacle detected by said obstacle detector on either one or both of said first image and said second image.

Statement under Art. 19.1 PCT
The virtual view point image is a first image (paragraph 0038) and the camera through image is a second image (paragraph 0040). The virtual view point image consists of images acquired from plural cameras which are converted to upper view point and are displayed on respective area with boundary lines defining each area to be shown (paragraph 0039). Therefore, a camera image or the second image has a region corresponding to the virtual view point image and lost appearance region outside of the virtual view point image region (paragraph 0051).

In accordance with the present invention, a rearward camera, and left side and right side cameras are provided to create the virtual view point image by converting the view point from the images acquired of respective cameras (paragraph 0034). A monitor is displayed respective virtual view point images on the restricted areas and an image of a work machine (paragraph 0062). The monitor is displayed not only the virtual view point images (first image) but also a camera through image (second image), further indicates the lost appearance region in the virtual view point image on the camera through image (paragraph 0075). The foregoing is the basis of amended claim 2.

The different expression manner is used for as a dot line for the virtual view point region 41 of Fig. 10, while a triangle portion 42 of Fig. 11 shown for lost appearance region, these are claim 3 and claim 4.

Claim 5 is not carried out substantial change for claim 5 before amendment.
